# EUROPEAN PATENT SPECIFICATION

(11) **EP 4 265 841 B1**
(45) Date of publication and mention of the grant of the patent: **12.02.2025**
(21) Application number: 22168768.4
(22) Date of filing: 19.04.2022
(51) Int. Cl.: D21J 3/00, D21J 7/00

(54) **MOLD FOR MANUFACTURING OF A MOLDED FIBER PRODUCT**
FORM ZUR HERSTELLUNG EINES FASERFORMPRODUKTES
MOULE POUR LA FABRICATION D'UN PRODUIT FIBREUX MOULÉ

(43) Date of publication of application: 25.10.2023
(73) Proprietor: Valmet Technologies Oy, 02150 Espoo (FI)
(72) Inventor: TRÄFF, Henrik, 85194 SUNDSVALL (SE); VAINIO, Kevin, 40720 JYVÄSKYLÄ (FI)
(74) Representative: Kespat Oy

(56) References cited:
- EP-A1- 3 237 680
- WO-A1-2006/057609
- DE-A1- 102018 003 447

## Description

The present invention relates to a mold for manufacturing of a molded fiber product, which mold includes a porous product surface made by additive manufacturing.

EP-patent number EP3237680 discloses a mold produced in an additive manufacturing process such as a 3D-printing process. Such an additive manufacturing process may comprise selective sintering of a powdery material having particles of an average size of 1 - 50 microns, preferably 5 - 30 microns. On the other hand, the powder grain size of 40 - 45 microns is common. During the sintering process, the powdery material is completely melted through the addition of energy by means of a laser beam. In the additive manufacturing process the wall of the mold is equipped with several small through holes to achieve a dense perforation for permeability. Thus, the tool wall portion is presenting pores, which are provided by a plurality of channels extending through the tool wall portion, from the product face to the back face.

It is laborious to manufacture the mold traditionally by machining from a solid piece of raw material. On the other hand, machining of complex structures is impossible. In addition, the through holes of the product surface can be too big which may cause clogging. The product surfaces equipped with extra metal mesh makes marks on the surface of the product. These marks may remain in spite of hot pressing. It is also laborious to clean the mold. The product surface makes the final molded fiber product rough and thereby suitable only for lower quality products because of markings. And more, the known mold explained above is usually for pulp as fiber suspension or fiber slurry only where the mold is dipped into fiber slurry and thereafter fiber product is sucked to the surface of the mold from a water suspension or injected through channels with excess of water.

The object of the invention is to provide for manufacturing of a molded fiber product a new kind of mold, which is more versatile than before, and also easier and quicker to manufacture. The characteristic features of the mold according to the invention are stated in the accompanying Claim 1. The properties of the mold can be easily varied and thereby achieving new porous structures and some combinations also. Porous means in this application minute interstices through which liquid, air or steam may pass via various undefined routes unlike in the perforation or hole which goes from one surface to an another as a defined channel. Besides, the mold is manufactured in less time thus saving the costs. In addition, the mold has good strength even when the shape of the mold can be complex. Also, the mold is easy to be cleaned. And more, product changes can be done faster and easier than before, and the manufacturing costs are lower than earlier. Another object of the invention is to provide a new and effective way to make additive manufactured molds for molded fiber products. With the new mold the process times are short and high pressures may be used. Simultaneously, the idle times are short since the molds are quick and easy the maintain.

The invention is described below in detail by referring to the enclosed drawings, which illustrate some of the embodiments of the invention, in which
- Figure 1: shows a top view of molds according to the invention for forming of a molded fiber product,
- Figure 2a: shows a side view of a pair of molds according to the invention,
- Figure 2b: shows a partial enlargement of Figure 2a,
- Figure 3: shows a cross section of a part of the mold according to the invention,
- Figure 4a: shows a side way of the mold according to the invention the parts disconnected in cross section,
- Figure 4b: shows the mold of Figure 4a the parts connected,
- Figure 5a: shows the parts of Figure 4a apart,
- Figure 5b: shows the parts of Figure 4b connected.
- Figure 6: shows a pair of molds for hot-pressing.

Molded fiber products, called also as MFP are made from cellulose fibers. Such products are disposable cups or plates, for example. Cellulose fibers are first dispersed in water, then formed, drained, and dried. One specific way to manufacture molded fiber products is thermoforming. After forming, the product is pressed with high temperature and pressure, the combination of which drains and evaporates the water and moisture out of the product. Advantageously, the ingredients are foamed before the forming, since the mold according to the invention suits perfectly for foam, especially in the thermoforming, like later stated. Thus, no oven drying is needed and high quality, thin-walled products are ready after manufacturing. The dimensional accuracy and rigidity are good, and the surface of the product is smooth.

Both forming and pressing need mold tool pairs that consist of one positive and one negative mold tool. At least one tool in the pair need to have drainage properties in the product surface contacting the fiber product, achieved by either perforation and/or somehow permeable material. This allows water and steam and air to travel through the perforated or otherwise permeable surface in the forming and/or pressing steps of the process.

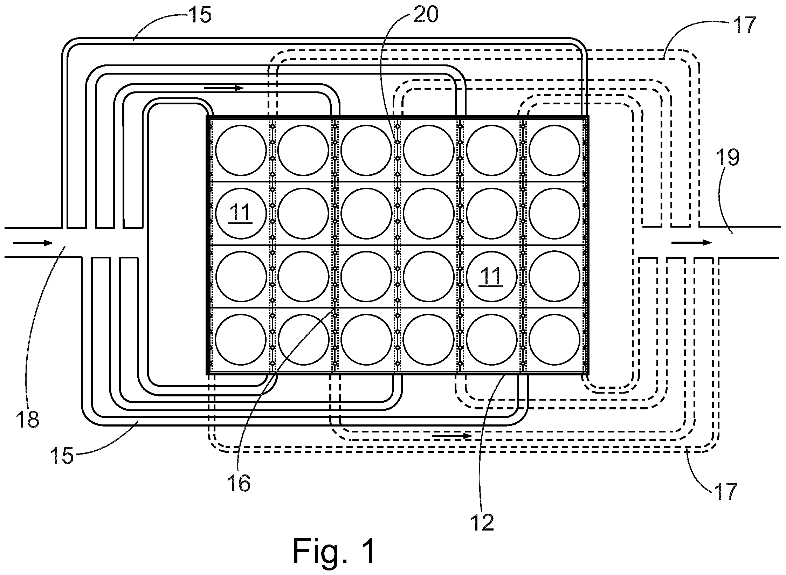

In Figure 1 there are molds 11 combined together to a mold base 12. In principle, one mold is a negative mold while the other one is a corresponding positive mold. In this way, during the forming the product gets three-dimensional shape. The water and air of the foam must be removed. This is done mainly by closing the pair of molds and vacuum aids the water removal. In the hot-pressing also steam and air blows aid the water removal. In other words, the distance between the opposite molds changes. When the pair is closing, the pressure forces air and water out of the foam fed between the molds. The permeable product surfaces of the molds are arranged to way out for water and air while the remaining fibers form a layer. After opening the pair, the product can be moved to the next process stage.

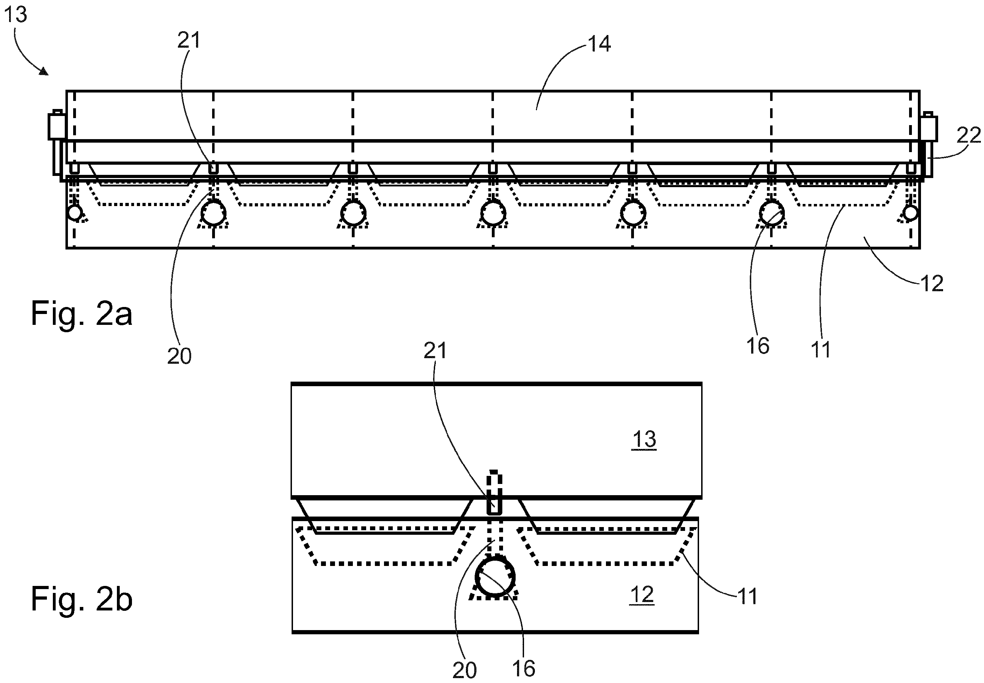

In the shown embodiment, foam is fed via the mold base 12 in between the molds while the pair 13 is sealed from its sides (Figure 2a). Here, the positive upper molds are supported to a mold frame 14. Thus, even the molds are apart, i.e. the pair is open, there is a closed cavity for foam. In this way, the feeding of foam is quick, and the timing can be selected more freely than before. Non-product surface of the mold may be used for inlets for foam. In detail, through openings are in the selected edges of a mold and especially between facing surfaces of the adjacent molds. However, in the shown embodiment, the pair 13 is formed of the upper mold frame 14 and the lower mold base 12, and the upper mold frame 14 is moved while the lower mold base 12 is arranged stationary. In other words, the lower mold base 12 is stationary, and foam is fed via it. The upper mold frame is movable. In this way, pipelines and other conduits connected to the lower mold base also remain in place, and the movable upper mold frame can be light-weighted. The light upper mold frame can be moved quicky and precisely. This accelerates the sequences of the molded fiber production machine. At the same time, the pipelines and other conduits stay stationary (Figure 1).

As described above, foam is in principle fed through the mold. More precisely, foam is fed through an interspace of the adjacent molds. The feeding channel is formed to the outer edge of the molds so that two neighboring molds with partial channel walls against each other are needed to form the whole feeding channel. In the outer edges the mold edge and surrounding frame form a channel together. This saves more space for the actual product shape. In Figure 1 is shown the mold base 12 with inlets 15. More precisely, each inlet 15 is connected to a lateral channel 16 through the mold base 12 and there is also a return conduit 17. Here the inlets are connected to a feed manifold 18 for feeding foam evenly to each inlet 15. Correspondingly, the return conduits 17 are connected to a return manifold 19. In this way foam flows constantly through the mold frame. Advantageously, the lateral channels 16 open between the molds 11 via several openings 20 on the mold surface, more precisely to a neck area between the product areas of the molds. In this way, foam will spread quickly and evenly between the molds. Here, the openings are situated on the neck area between the products, and they are upward. At the same time, the opposite mold frame 14 has pins 21 at the points of the openings 20 (Figure 2a and 2b). The pins have two main tasks. First, each pin guides the molds during the closing. This keeps the pair in shape and the product precise. Second, each tapered pin closes the opening of its own and cleans the opening. So, the closing the pair automatically shuts off the feed preventing backflow into the inlets or lateral channels. Vice versa, opening the pair opens the lateral channels and foam fills the mold space. The foam feed channels like inlets 15 and openings 20 to molding space are favorable in connection of the side walls of the molds.

For sealing, the pair 13 has an outer sleeve 22 arranged to seal the pair 13 even the molds base 12 and mold frame 14 are at a distance from each other. In this way, a close mold space is formed, and a great volume of foam can be fed to the mold space, which is like a closed cavity. Advantageously, the outer sleeve 22 is adjustable in relation to the pair 13. Thus, the sleeve may slide and give room for the product when the product is removed and shifted to the hot-pressing. There may be one common sleeve or both molds may have a sleeve of their own.

As shown previously, the lateral channels 16 are arranged between the molds 11, and they include openings 20 to the mold surface. In this way, each mold is evenly filled with foam. Thus the products are uniform, and the process is quick. In practice, foam circulates through the mold base. When the upper mold frame is lifted, the pins come out of the openings, and the foam flows into the mold space. The filling is quick, and again when the pair closes, the pins close the openings. This valving feature can be use with the actual valves before the manifold or independently.

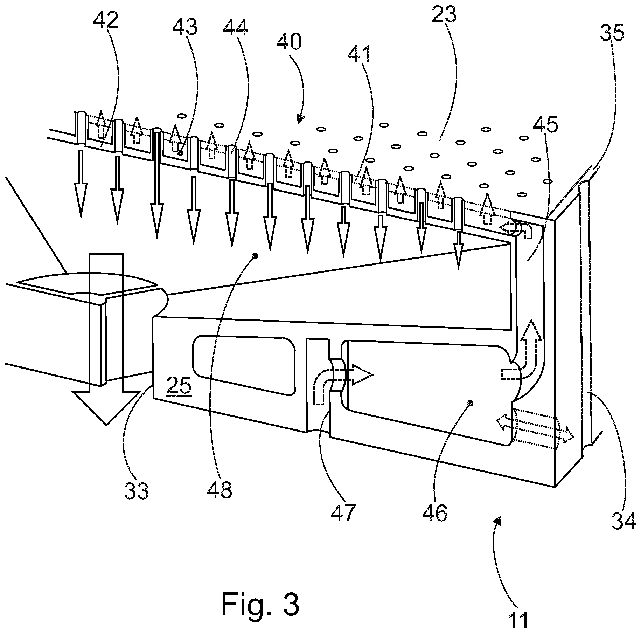

As mentioned earlier, the mold 11 includes a product surface 23 made by additive manufacturing. According to the invention, the product surface 23 is arranged as a double deck structure 40 including two layers 41 and 42 between which there is a cavity 43 (Figure 3). Actually there are two cavities for selected purposes. In addition to the cavity 43 there is a second cavity 48. These cavities can be run independently with different fluids either for feeding or removing. The layers may be thin while being apart the layers together form a stiff construction. In the double deck structure 40 the first layer 41 has porousness from the cavity 43 to the product surface 23. At the same time, the second layer 42 has perforations isolated from the cavity 43 and extending from the product surface 23 through the double deck structure 40. There are on large area dense perforations through the porous layer and the solid layer. By this unique structure, two different functionalities are implemented into the mold, more precisely into the product surface. First, during the forming, water, and air run through the porousness of the second layer. In other words, water, and air run through the product surface while the fibers build up on the product surface. Second, after forming for example, fluid can be fed to the cavity and thereby through the first layer up to the product surface. In this way the product surface is cleaned and kept clean. Fluid can be compressed air or water or steam or a combination of two or more fluids, for example. Air is advantageous, since the cavity can be small, and additional water is avoided. Also, when detaching the formed fiber product from the mold, compressed air aids the removing of the product. Also, both above mentioned cavities can have suction if there is a need for more efficient water removal.

As mentioned earlier, the double deck structure 40 can be thin, but still being stiff. Also, thin structure is fast to manufacture, and the volume of the mold is diminished as little as possible. In practice, the double deck structure has a thickness of 4 - 10 mm. At the same time, the layers 41 and 42 have thicknesses of 0,2 - 2 mm. The thinner layer, the bigger cavity. In addition, the first layer may be thinner than the second layer, or vice versa. Also, especially the thickness of the second layer may vary in different areas of the layer to optimize the stiffness of the layer, for example.

Advantageously, the first layer 41 has random made porosity. In this way it is prevented fibers entering inside the product surface. Also the fluid is distributed evenly all over the product surface. And more, the first layer can be very thin. In turn, the perforations of the second layer 42 consists of 3D-printed pipes 44 extending from the product surface 23 through the double deck structure 40. In this way, the drainage capacity is sufficient, but permeability is small enough the keep fibers on the product surface. The pipes also combine the layers together making strong structure with two layers and a cavity therebetween. Instead of uniform pipes, there can be channels which may be more open away from the product surface. In practice, the mouth diameter of the pipe 44 is 0,1 - 2 mm. These pipes are very small, but still possible to manufacture by 3D-printing. Other channels may have irregular form of the mouth. Despite of the pipe or channel, the opening to the product surface is the smallest while the rest channel may be become bigger. Depending on the diameter there are 1 - 30 pipes per square centimeter. With traditional machining methods so small holes would be impossible to manufacture so dense. Again, it is also easy to vary the size and density of the pipes. Then the properties of the second layer 42 can be different in different parts of the product surface 23. Also, the second layer may have less surface area than the product surface when dense cone like perforations opens to said surface. In fact, the perforations may fill the whole surface.

In the embodiment of Figure 3 the mold 11 is a uniform 3D-printed body. In other words, the whole mold is printed at once with both layers including pipes and porous structure. This kind of structure is compact, light, and stiff. Also the long-life mold needs little maintenance since the product surface is kept clean with fluid through the first layer. Here also, the properties of the first layer 41 are different in different parts of the product surface 23. For example, the porousness of the first layer may be bigger on the edges of the product to ensure the drainage. In forming, the perforations may be more suitable for drainage and porousness for release.

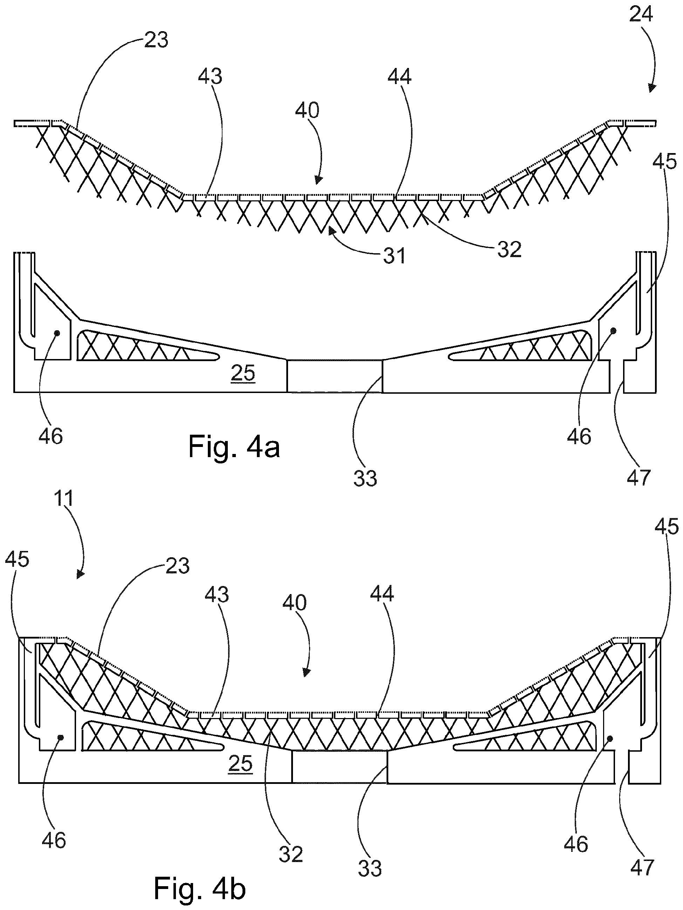

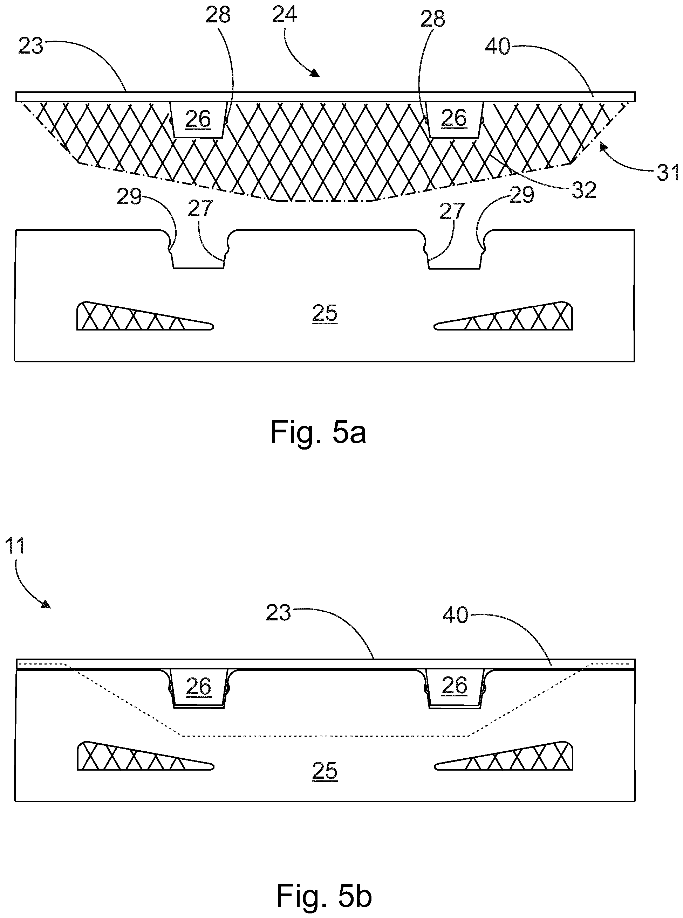

In another embodiment, the double deck structure 40 is arranged as a skin 24 detachably fixed to a base structure 25 (Figures 4a and 5a). In this way, the skin can be easily removed for cleaning and maintenance. Also, there can be several same kind or different kind of skins for one base structure. In other words, the worn or dirty skin may be changed quickly to a new one. Thus the production can continue with breaks as short as possible. In the same way, the product to be manufactured can be changed quickly by using a different kind of skin. In addition to quick change, using the skin the base structure 25 can be different material than the skin 24. The different material may be cheaper or lighter material or can act as insulation or heat conductor.

There is at least one inlet in order to feed fluid to the cavity. The inlet may be from the side of the mold if there is room. In the shown embodiment, the inlet 45 is included inside the mold 11. In this way, the fluid can be fed from below like in Figures 3 and 4b. Then several molds can be arranged side by side. Advantageously, the inlet 45 is preceded with a fluid distribution chamber 46 arranged inside the mold 11. With this chamber, fluid is evenly distributed to one or more inlets and further to the cavity and thereby evenly on the whole product surface. In Figures 4a and 4b, the fluid distribution chamber 46 is circumferential and situated on the outer rim of the base structure. Here there is one feed hole 47 at the bottom. In Figure 3 the distribution chamber 46 has bigger volume. As said before, the distribution chamber is optional. However, here the distribution chamber is formed inside the mold since there is room. At the same time, the time for manufacturing get shorter and the mold become lighter. An alternative position of the feed hole 47 is shown with dashed lines in Figure 3. In addition to pressure connection, the fluid distribution chamber may have a vacuum connection. In this way, the product can be controlled during lateral movements, especially when the mold is in an upper position. In other words, the product is held on with suction. To release the product, vacuum is stopped. If necessary, over pressure is used to aid the releasing of the product. This ensures quick and exact production.

During the forming or hot-pressing water and moisture are forced through the double-deck structure via the second layer. Pressure and gravity aid the drainage. Here, inside the mold 11 there is also a second cavity 48 limited by the double deck structure 40 at one side. With the vacuum the drainage is improved further. With a large vacuum chamber suction is spread evenly to the whole area of the double-deck structure. At the same time even one outlet 33 at the vacuum chamber 48 is enough. In Figure 3 the vacuum chamber 48 is inclined towards the outlet 33. Thus water is removed hasty and without hindrance out of the mold. Both cavities can have both vacuum and pressure connections. The very same type of connection can be used simultaneously or different type of connection consecutively.

The above described mold is double functioning. The second cavity is next to the double-deck structure which has the first cavity inside. If necessary, water is drained through the pipes advantageously by aid of vacuum. After forming or pressing compressed air can be fed to the first cavity. The pressurized fluid gives the possibility to introduce pressure spikes when the formed products are lifted from the molds in the different process stages as well as a constant airflow to continuously reduce sticking and assure release of formed products. The use of cavities can be versatilely varied both in the upper and lower mold in order the adjust the production.

The pipes of the second layer form holes that can have any shape of channels like squares, circles, ovals, hexagons, for example. The pipes may also be bent or straight and different sizes from one side to the other. For example, the pipes may be conical. At the same time, the pipes may also vary in diameter and/or profile shape as well as having rounded or chamfered inlets and/or exits. Also, the length of the pipes may be different depending on the mold layout. The perforation density can differ over the product surface to adapt functionality to different shapes and fluid evacuation properties.

The first layer is porous. The thickness and/or porosity level may be varied in the product surface to accommodate certain porous material properties and functionality. This also applies if a perforation is utilized instead of porous metal for the air emitting areas of the forming surface.

The double deck structure and the base structure can be optimized. Especially, the properties of the double deck structure can be adapted for each production and product. Advantageously, the skin 24 is detachably arranged to the base structure 25. In this way, the skin and the base structure can be manufactured separately, even from different materials. Simultaneously, the skin is easy to detach for cleaning and exchange. Also, at the product change, only the skin is changed. This facilitates the change.

Advantageously, the base structure 25 has a universal geometry for several skins 24 with different properties. In this way, the base structure may stay in the production machine and only the skin is changed at the time of the product change. In the same way, the skin can be quickly changed for cleaning and renovation. If the product to be manufactured is not changed, a same kind of skin attached to the base structure while the previous skin is cleaned without any hurry. Then the production interruption time is minimized. Advantageously, several base structures are arranged into a mold base.

There are many ways how to attach the parts together. In Fig 5a is shown two at least partially tapered snap-fit structures 26 arranged on one side of the skin 24. Actually, there are similar snap-fit structures 26 on each side of the skin 24, which is a square in shape. In this way, the skin is rigidly attached to the base structure. There are corresponding holes 27 for each snap-fit structures 26 in the base structure 25. The cones will align the skin properly and the attachment is backlash free. In Figure 5a, the snap-fit structures 26 has an annular protrusion 28 while the hole 27 has a corresponding groove 29. When the skin is assembled, the protrusion will snap fit into the groove. This form locking keeps the skin attached during the forming process of the product, but the skin can be detached simply by pulling. Alternatively or in addition, one or more bolts maybe used for securing the attachment. Also glue or other adhesive maybe used for attaching and sealing the skin. The skin may be attached to the base structure either by hinged frame, bayonet, form locking, screws with or without sealing with silicon or glue.

In Figure 4a, the double deck structure forms the product surface 23 and there is a support structure 31 on the opposite side compared to the product surface 23. The layer has a specific permeability according to the production. Then the support structure has more open construction. In practice, the support structure lays on the base structure. In this way, the load from the product surface is conveyed via the support structure to the base structure. Of course, the support structure brings stiffness to the double deck structure. In this way, the skin may be manufactured, handled, and attached easily.

In one embodiment, the double deck structure 40 and the support structure 31 form a uniform structure. In other words, both are printed at the same time in one piece. In this way, the structure can be optimized. This reduces the size of the skin but keeps the open volume large. Simultaneously, the time of printing the skin get shorter. Alternatively, the double deck structure and the support structure 31 can be different parts which is not favorable due the strained tolerances. This enables using different double deck structures with one support structure. However, the double deck structure must have enough stiffness of its own. So, the thickness of the double deck structure increases. This may increase the weight of the whole skin. On the other hand, only the double deck structure of the skin may be changed while the support structure remains. Again, different material may be used.

In Figures 4a and 5a the support structure 31 includes a three-dimensional lattice 32 made by additive manufacturing. The lattice brings good stiffness and support for the double deck structure, but still a lot of open space for air, water, and steam. Alternatively or in addition, also honeycombs or cavities or other combination structures are possible.

Thin double deck structure gives more space for the products. Maximizing space in the molds might get important with more radical product shapes. Then making a slightly thinner double deck structure with less porosity helps to increase space and thus allowing slightly bigger end products within the given tool frame. Support structure part can be even thicker than the double deck structure. The double deck structure is dense enough but stays open and clear without clogging. Also water runs quickly through the thin double deck structure, which facilitates the forming and pressing of the product. Also, the first layer can be at least partly without defined holes forming undefined mesh, where particles are melt together leaving some open volume therebetween. In practice, foam is carrying the fibers for the forming. In foam forming technology aqueous foam instead of water is used as a carrier medium in the manufacturing process of fiber-based products. The support structure can have complex cavity and protrusion structures between the base and the product surface. While at least the product surface is partly porous, there is at least in the edges a solid surface which prevents air leaking to the mold. Advantageously only the very edges of the product surface are solid for preventing especially the steam escaping in the hot press.

Depending on the product produced with the mold, the double deck structure may consist of several parts having different properties. For example, the thickness of the double deck structure may be uneven in different parts of the product surface. For example, recesses can be used on the surface away from the product surface making better permeability in such locations. Also, the printing parameters may be different to adjust the properties of the layers. In this way, the mold and its product surface can be easily optimized.

Water and air running through the double deck structure are collected by the base structure. Like in Figures 4a and 4b, at the center of the base structure 25 there is an outlet 33. The outlet is connected to a pipe or similar (not shown). Advantageously, also vacuum is used to aid the water removal. Since the outlet is in the center, vacuum is distributed evenly, and water flows smoothly towards the center. Advantageously, the base structure has a bucket-like geometry sloping to the center of the base structure 25. This aids the drainage. Also, the support structure 31 contours the forms of the base structure 25. In this way, the structure of the mold is rigid and the load from the product surface is supported with the support structure and the base structure together. Thus, the structures may be light when all parts cooperate. This also facilitates the printing process of the skin and the base structure.

Here the mold has size of 200*200 mm. If needed, also bigger sizes are possible, for example up to 300 - 500 mm edge length. The combination structure of the double deck structure and the base structure thickness is here less than 50 mm, but the thickness of the base structure can be up to 100 - 300 mm. In the production machine, several molds are assembled side by side with support structures against to the mold bases to result a mold matrix. Especially, the detachable skin allows better cleaning of each mold. The design of the mold with edge feed allows some space in the edges for skin attachment arrangement. The skin 24 may have recess 34 at the point of the opening and the pin. Here there is also a solid edge collar 35 next to recess 34. This solid frame or collar around the skin prevents air and pressure leakage. This solid edge is only 1 - 3 mm narrow. Thus the area of the process surface is maximized while the size of the skin is minimized. In addition, the detachable skin allows quick or even tool-less skin change. The open inner lattice improves dewatering and drying with the double deck structure. Especially the double deck structure can be optimized, which allows low structures. This reduces costs and shortens the printing time.

Surprisingly, the first layer is at least semi randomly made by additive manufacturing and simultaneously the pipes are printed. The semi random structure has an uncontrolled geometry which lacks through holes. Thus, the first layer is like a mesh having good porosity for air, but still good restraint for fibers. This ensures good forming and pressing properties with low energy. The properties of the first layer are dictated by various parameters in the printing process, such as laser power, laser speed, layer height, scan line distances and over all scanning strategy. Also, the use of an electron beam is possible.

The porosity and permeability levels will be easy to adjust by 3D-printing. In other words, there can be different porosity and permeability levels in different parts of the product surface. Also, the flow resistance of the first layer will increase with layer thickness likely linearly. For example, when the thickness doubles, also the flow resistance doubles. Anyhow, when compared to traditional perforated mold surface, the porous first layer can be made thinner when reducing porousness and increasing density. The support structure will keep the double deck structure in shape even in the hot temperatures and during press loads. Any fluid will flow also in lateral direction and in any direction in the lattice. Thereby the drainage will be efficient and well-focused. The lattice can vary inside the mold. In other words, it is possible to generate structures according to loading needs in the mold.

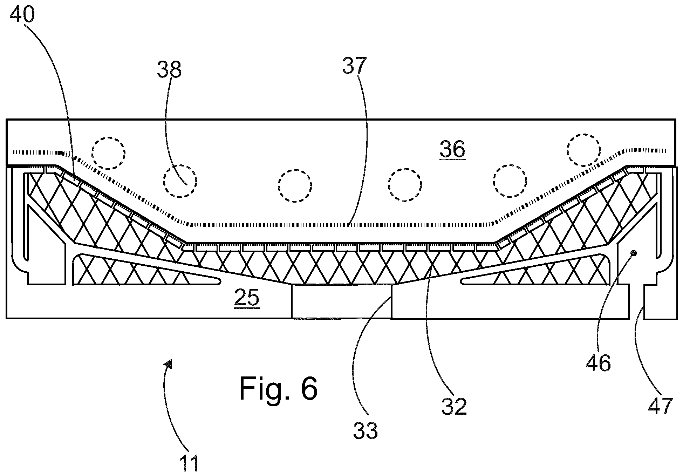

The shown molds are suitable for both forming and hot-pressing. Next to the forming unit there is one or more hot-press units. Figure 6 shows one pair of molds for a hot-press unit. Advantageously there are two consecutive hot pressing units, but more generally there are one to three hot-press units. In Figure 6 the lower mold 11 has the double deck structure according to the invention while the upper hot-press mold 36 has a smooth surface. The mold according to invention is an excellent pair to a heated mold with a smooth product surface. In another pair the lower mold would be smooth and the upper porous. The opposite porous molds in the consecutive hot-press units is the best mode for a foamed fiber molding machine. Thereby both sides of the end-product will be smooth and dense. Here the upper hot-press mold 36 has an electric heater 37 for heating up the mold. With dashed circles are illustrated optional cooling or heating channels 38 for increasing the performance of the tooling depending on the application. In additive manufacturing the channels can be easily applied inside any part of the mold, like the supporting structures or the double deck structure itself.

As said earlier, in the hot-press, only one of the mold has the double deck structure. The other mold is closed, smooth and heated or cooled. Thus one side of the product is smoothing out while the water and steam run through the product via the opposite mold having the double deck structure. The double deck structure is very advantageous for hot press because large porous surface is permeable for steam and water. This product surface gives better support than traditional solid mold pair. In said molds the other mold has holes leaving much solid to solid surface area which is prone to temperature and pressure variations. The efficiency is also affected by the solid narrow edge, which prevents suction and steam from escaping from the sides. In addition, the surface of the product is smoothed excellently. The new mold in use is quick and reliable. Especially, the mold disclosed is advantageous in the hot-pressing. Water and steam can flow quickly through the thin and porous layer to the open volume. And more, in practice the product can be formed with any other known technology, but then hot-pressed with the mold according to the invention.

The molds according to the invention have denser surface than prior art molds with made local holes but still open enough over the whole product surface for foam molded fiber products. Additive manufacturing can in addition to build fine perforations, also achieve porous metal structures. Porous metal structures can be used instead of a defined perforation and mimic a very fine undefined mesh, dictated by process parameters of the 3D printer. In this way the overall porosity of the metal structures can be controlled even though their microstructures are undefined. The porous double deck structure is supported by a support structure that can be fused to the double deck structure during the build process, typically a suitable lattice structure. This is an advantage of porous metal structures compared to defined perforated structures, the data preparation is less cumbersome because support structure placement is less critical.

Porous layer enables fluid to drain out, while leaving fibers on the top of the layer. In other words the molds according to the invention are suitable for forming unit in a foamed fiber molding machine. Additive manufacturing enables optimized mold geometries. On the other hand, this mold is advantageous for a hot-pressing unit in a fiber molding machine irrespective of the preceding forming unit. However, foam has less water to drain compared to slurry.

The mold according to the invention is additive manufactured preferably with one-piece structure. Alternatively the mold may have two parts attached to each other like the detachable skin. The skin with the support structure like the lattice and the base structure forms a cavity which makes large open space or void volume inside the mold. In other words, said space is defined by the product surface and the base structure forming a cavity bottom with thin side walls vertical or slightly inclined inwards to the mold bottom. The cavity ensures also short route through product surface for the water, air, and steam from every possible part of the product surface and the cavity contours the said surface so that there is maximum space for the product surface within the mold area. Also, thin structures are fast to 3D-print the mold. In practice, the wall thickness of the mold is surprisingly thin, 2 - 6 mm, advantageously 2 - 4 mm while the thickness of the base structure is 7 - 20 mm, advantageously 8 - 15 mm.

The bottom of the mold or the base structure is advantageously a bit thicker than other parts thereby ensuring rigid support for the first layer forming the product surface. The surfaces or walls defining the cavity are as thin as possible just designed to sustain loading during pressing. The bottom of the mold or the base structure may have inner chambers with or without lattices. The chambers may be used for fluids. At least they lighten the mold and speed up the printing.

## Claims

1. Mold for manufacturing of a molded fiber product, which mold (11) includes a porous product surface (23) made by additive manufacturing, **characterized in that** the product surface (23) is arranged as a double deck structure (40) including two layers (41, 42) between which there is a cavity (43) wherein the first layer (41) has porousness from the cavity (43) to the product surface (23), and the second layer (42) has perforations isolated from the cavity (43) and extending from the product surface (23) through the double deck structure (40).

2. Mold according to claim 1, **characterized in that** the double deck structure (40) has a thickness of 4 - 10 mm.

3. Mold according to claim 1 or 2, **characterized in that** the layers (41, 42) have thicknesses of 0,2 - 2 mm.

4. Mold according to any of claim 1 - 3, **characterized in that** the first layer (41) has random made porosity.

5. Mold according to any of claim 1 - 4, **characterized in that** the perforations of the second layer (42) consists of 3D-printed pipes (44) extending from the product surface (23) through the double deck structure (40).

6. Mold according to claim 5, **characterized in that** the mouth diameter of the pipe (44) is 0,1 - 2 mm.

7. Mold according to any of claim 1 - 6, **characterized in that** the mold (11) is a uniform 3D-printed body.

8. Mold according to any of claim 1 - 6, **characterized in that** the double deck structure (40) is arranged as a skin (24) detachably fixed to a base structure (25).

9. Mold according to claim 8, **characterized in that** the base structure (25) is different material than the skin (24).

10. Mold according to any of claim 1 - 9, **characterized in that** the cavity (43) has an inlet (45) included inside the mold (11).

11. Mold according to claim 10, **characterized in that** the inlet (45) is preceded with a fluid distribution chamber (46) arranged inside the mold (11).

12. Mold according to any of claim 1 - 11, **characterized in that** inside the mold (11) there is a second cavity (48) limited by the double deck structure (40) at one side.

13. Mold according to claim 12, **characterized in that** at the second cavity (48) has an outlet (33).

14. Mold according to any of claims 1 - 13, **characterized in that** the properties of the first layer (41) are different in different parts of the product surface (23).

15. Mold according to any of claims 1 - 14, **characterized in that** the properties of the second layer (42) are different in different parts of the product surface (23).

## Patentansprüche

1. Form zur Herstellung eines Faserformprodukts, wobei die Form (11) eine durch additive Fertigung hergestellte poröse Produktoberfläche (23) aufweist, **dadurch gekennzeichnet, dass** die Produktoberfläche (23) als Doppelstockstruktur (40) angeordnet ist, die zwei Schichten (41, 42) aufweist, zwischen denen sich ein Hohlraum (43) befindet, wobei die erste Schicht (41) von dem Hohlraum (43) bis zur Produktoberfläche (23) Porosität aufweist und die zweite Schicht (42) Perforationen aufweist, die von dem Hohlraum (43) isoliert sind und sich von der Produktoberfläche (23) durch die Doppelstockstruktur (40) erstrecken.

2. Form nach Anspruch 1, **dadurch gekennzeichnet, dass** die Doppeldeckstruktur (40) eine Dicke von 4-10 mm aufweist.

3. Form nach Anspruch 1 oder 2, **dadurch gekennzeichnet, dass** die Schichten (41, 42) Dicken von 0,2-2 mm aufweisen.

4. Form nach einem der Ansprüche 1 bis 3, **dadurch gekennzeichnet, dass** die erste Schicht (41) eine zufällig hergestellte Porosität aufweist.

5. Form nach einem der Ansprüche 1 bis 4, **dadurch gekennzeichnet, dass** die Perforationen der zweiten Schicht (42) aus 3D-gedruckten Rohren (44) bestehen, die sich von der Produktoberfläche (23) durch die Doppeldeckstruktur (40) erstrecken.

6. Form nach Anspruch 5, **dadurch gekennzeichnet, dass** der Mündungsdurchmesser des Rohres (44) 0,1-2 mm beträgt.

7. Form nach einem der Ansprüche 1 bis 6, **dadurch gekennzeichnet, dass** die Form (11) ein einheitlicher 3D-gedruckter Körper ist.

8. Form nach einem der Ansprüche 1 bis 6, **dadurch gekennzeichnet, dass** die Doppeldeckstruktur (40) als Haut (24) angeordnet ist, die abnehmbar an einer Basisstruktur (25) befestigt ist.

9. Form nach Anspruch 8, **dadurch gekennzeichnet, dass** die Basisstruktur (25) aus einem anderen Material als die Haut (24) besteht.

10. Form nach einem der Ansprüche 1 bis 9, **dadurch gekennzeichnet, dass** der Hohlraum (43) einen Einlass (45) aufweist, der im Inneren der Form (11) eingeschlossen ist.

11. Form nach Anspruch 10, **dadurch gekennzeichnet, dass** dem Einlass (45) eine im Inneren der Form (11) angeordnete Fluidverteilungskammer (46) vorgeschaltet ist.

12. Form nach einem der Ansprüche 1 bis 11, **dadurch gekennzeichnet, dass** im Inneren der Form (11) ein zweiter Hohlraum (48) vorhanden ist, der auf einer Seite durch die Doppelstockstruktur (40) begrenzt ist.

13. Form nach Anspruch 12, **dadurch gekennzeichnet, dass** der zweite Hohlraum (48) einen Auslass (33) aufweist.

14. Form nach einem der Ansprüche 1 bis 13, **dadurch gekennzeichnet, dass** die Eigenschaften der ersten Schicht (41) in verschiedenen Teilen der Produktoberfläche (23) unterschiedlich sind.

15. Form nach einem der Ansprüche 1 bis 14, **dadurch gekennzeichnet, dass** die Eigenschaften der zweiten Schicht (42) in verschiedenen Teilen der Produktoberfläche (23) unterschiedlich sind.

## Revendications

1. Moule pour la fabrication d'un produit fibreux moulé, moule (11) qui comprend une surface de produit poreuse (23) issue d'un procédé de fabrication additive, **caractérisé en ce que** la surface du produit (23) est une structure à double étage (40) incluant deux couches (41, 42) entre lesquelles se trouve une cavité (43) où la première couche (41) est poreuse entre la cavité (43) et la surface du produit (23), et la deuxième couche (42) est dotée de perforations isolées de la cavité (43) et s'étendant de la surface du produit (23) jusqu'à la structure à double étage (40).

2. Moule conformément à la revendication 1, **caractérisé en ce que** l'épaisseur de la structure à double étage (40) est comprise entre 4 et 10 mm.

3. Moule conformément à la revendication 1 ou 2, **caractérisé en ce que** l'épaisseur des couches (41, 42) est comprise entre 0,2 et 2 mm.

4. Moule conformément à l'une quelconque des revendications 1 à 3, **caractérisé en ce que** la porosité de la première couche (41) est aléatoire.

5. Moule conformément à l'une quelconque des revendications 1 à 4, **caractérisé en ce que** les perforations de la deuxième couche (42) se composent de cylindres imprimés en 3D (44) qui s'étendent de la surface du produit (23) jusqu'à la structure à double étage (40).

6. Moule conformément à la revendication 5, **caractérisé en ce que** le diamètre d'entrée du cylindre (44) est compris entre 0,1 et 2 mm.

7. Moule conformément à l'une quelconque des revendications 1 à 6, **caractérisé en ce que** le moule (11) est un corps uniforme imprimé en 3D.

8. Moule conformément à l'une quelconque des revendications 1 à 6, **caractérisé en ce que** la structure à double étage (40) est conçue comme une enveloppe (24) fixée à une structure de base (25) mais amovible.

9. Moule conformément à la revendication 8, **caractérisé en ce que** le matériau de la structure de base (25) est différent de celui de l'enveloppe (24).

10. Moule conformément à l'une quelconque des revendications 1 à 9, **caractérisé en ce que** la cavité (43) dispose d'un orifice d'admission (45) inclus dans le moule (11).

11. Moule conformément à la revendication 10, **caractérisé en ce que** l'orifice d'admission (45) est précédé d'une chambre de distribution de liquide (46) intégrée au moule (11).

12. Moule conformément à l'une quelconque des revendications 1 à 11, **caractérisé en ce qu'**à l'intérieur du moule (11) se trouve une deuxième cavité (48) limitée par la structure à double étage (40) d'un côté.

13. Moule conformément à la revendication 12, **caractérisé en ce que** la deuxième cavité (48) est dotée d'un orifice de sortie (33).

14. Moule conformément à l'une quelconque des revendications 1 à 13, **caractérisé en ce que** les propriétés de la première couche (41) sont différentes à divers endroits de la surface du produit (23).

15. Moule conformément à l'une quelconque des revendications 1 à 14, **caractérisé en ce que** les propriétés de la deuxième couche (42) sont différentes à divers endroits de la surface du produit (23).
